# EUROPEAN PATENT APPLICATION

(11) **EP 4 148 585 A1**
(43) Date of publication of application: **15.03.2023**
(21) Application number: 21812877.5
(22) Date of filing: 30.04.2021
(51) Int. Cl.: G06F 11/36

(54) **APPLICATION DEBUGGING METHOD AND SYSTEM, AND DEVICE AND MEDIUM**

(30) Priority: 26.05.2020 CN 202010456122; 14.08.2020 CN 202010819208
(71) Applicant: Huawei Cloud Computing Technologies Co., Ltd., Guizhou 550025 (CN)
(72) Inventor: WANG, Yawei, Shenzhen, Guangdong 518129 (CN); PERETZ, Noam, Shenzhen, Guangdong 518129 (CN); SEGEV, Guy, Shenzhen, Guangdong 518129 (CN); HUTA, Eviatar, Shenzhen, Guangdong 518129 (CN); YE, Wei, Shenzhen, Guangdong 518129 (CN); WANG, Qian, Shenzhen, Guangdong 518129 (CN)
(74) Representative: Thun, Clemens
(86) International application number: PCT/CN2021/091752
(87) International publication number: WO 2021/238592

(57) **Abstract**

This application provides an application debugging method, used to debug an application deployed in a production environment, where an application sub-module included in the application runs in the production environment to provide a service, and the method includes: receiving identifiers of a plurality of application sub-modules that are input or selected by a user, debugging code blocks of the plurality of application sub-modules based on the identifiers of the plurality of application sub-modules, and presenting a debugging result to the user. The method supports the user to select or input a plurality of to-be-debugged application sub-modules, and debug the plurality of application sub-modules in the production environment, thereby improving efficiency of application debugging, and enabling the user to debug the application more conveniently.

## Description

This application claims priority to Chinese Patent Application No. 202010456122.7, filed with the China National Intellectual Property Administration on May 26, 2020 and entitled "APPLICATION DEBUGGING METHOD, APPARATUS, DEVICE, AND MEDIUM", and Chinese Patent Application No. 202010819208.1, filed with the China National Intellectual Property Administration on August 14, 2020 and entitled "APPLICATION DEBUGGING METHOD AND SYSTEM, DEVICE, AND MEDIUM", which are incorporated herein by reference in their entireties.

### TECHNICAL FIELD

This application relates to the field of application development technologies, and in particular, to an application debugging method, an application debugging system, a computing device, and a computer-readable storage medium.

### BACKGROUND

An application is a collection of computer programs written for a special application purpose of a user. An application usually goes through a plurality of phases, such as development, testing, and rollout, from project initiation to delivery to customers. A corresponding environment is usually configured in each phase of development, testing, and rollout, for example, a development environment (development environment), a testing environment (testing environment), and a production environment (production environment).

A developer usually needs to debug the application. The debugging of the application includes detecting an error in program code of the application manually or in a compilation manner, and then correcting the program code based on the error found in a debugging process. Currently, application debugging in the industry is usually debugging program code of an application in a development environment by using an integrated development environment (integrated development environment, IDE).

How to efficiently debug a rollout application (that is, an application that has been deployed in the production environment) has become a major concern in the industry.

### SUMMARY

This application provides an application debugging method, to directly debug a plurality of application sub-modules of an application in a production environment, thereby improving debugging efficiency. This application further provides an application debugging system, a computing device, a computer-readable storage medium, and a computer program product corresponding to the foregoing methods.

According to a first aspect, this application provides an application debugging method. Ato-be-debugged application is deployed in a production environment (production environment). The production environment is an environment in which a service is formally provided. In some embodiments, the production environment may be a data center owned by a customer, a public cloud platform purchased or leased by a customer, or the like.

An application sub-module included in an application runs in the production environment to provide a service. The application sub-module is a functional module that implements one or more functions by using a computer-executable code block. In some embodiments, for example, in an application based on a microservice architecture, an application sub-module included in the application may be a microservice. The application sub-module may also be one or more source code files in form.

The method may be executed by an application debugging system. The application debugging system receives identifiers of the plurality of application sub-modules that are input or selected by a user. A code block included in each application sub-module is used to implement a function of the application. Then, the application debugging system debugs code blocks of the plurality of application sub-modules based on the identifiers of the plurality of application sub-modules. Then, an application debugging module presents a debugging result to the user.

The method can support the user in selecting the plurality of application sub-modules for debugging, so as to debug the plurality of application sub-modules of the application. This improves debugging efficiency of the application. Further, in the method, the user may directly perform debugging in the production environment, and does not need to reproduce, in a development environment, an exception generated during application running in the production environment, thereby improving debugging efficiency. In addition, in some embodiments, the method supports cloud debugging on the application. There is no need to load a code block included in an application sub-module to an integrated development environment (integrated development environment, IDE), and perform local debugging on the application in the development environment by using the IDE. There is also no need to redeploy the debugged application to a production environment. This saves time and further improves debugging efficiency.

In some possible implementations, the application debugging system may present a debugging progress diagram of the application to the user through a graphical user interface (graphical user interface, GUI) in a debugging process, so as to present a debugging result (specifically, an intermediate debugging result) to the user.

The debugging progress diagram includes one or more types of the following information: a debugged application sub-module, an application sub-module being debugged, an application sub-module reporting a debugging error, a debugging error notification, a debugging error type, and a request/response flow of an application sub-module. Reporting a debugging error means that an error occurs in the code block of the application sub-module during running, and the application debugging system detects the error through debugging and reports the error to the user. The debugging error type may include missing parameters, incorrect parameter types, and parameter verification exceptions.

On one hand, the debugging progress diagram may help the user quickly learn a debugging status. On the other hand, the debugging progress diagram may provide a reference for the user to determine a next to-be-debugged application sub-module or a next group of to-be-debugged application sub-modules, and provide a reference for the user to modify a code block of the application sub-module reporting the debugging error.

In some possible implementations, the application debugging system may present stack information and/or a variable of the debugged application sub-module in a debugging process to the user, so as to present a debugging result (specifically, an intermediate debugging result) to the user. It should be noted that, as the debugging process proceeds, the application debugging system may dynamically present the stack information and/or variable of the debugged application sub-module in the debugging process to the user.

The stack information may include an identifier of an executed function in a call stack. Further, the stack information may further include information such as an identifier of a currently executed function. The variables refer to variables (such as local variables) involved in the foregoing functions.

The stack information and variables are presented, so that the user can determine whether the code block of the application sub-module is abnormal based on whether the value of the variable is the same as the expected value. This helps application debugging.

In some possible implementations, the application debugging system may receive identifiers of the plurality of application sub-modules that are selected by the user through the GUI. Certainly, the application debugging system may receive the identifiers of the plurality of application sub-modules that are input by the user through a command user interface (command user interface, CUI).

When an application debugger is different from an application developer, debugging through the GUI is more friendly to the application debugger. When the application debugger is the same as the application developer, the debugging process through the CUI is simpler.

In some possible implementations, before receiving the identifiers of the plurality of application sub-modules that are input or selected by the user, the application debugging system may further present a list of application sub-modules of the application to the user through the user interface (for example, the CUI and/or the GUI), and/or present a topology diagram of the application sub-modules of the application to the user through the user interface (for example, the GUI).

In this way, it is convenient for the user to input or select the identifiers of the plurality of application sub-modules, so as to debug the plurality of application sub-modules.

In some possible implementations, the application debugging system may obtain structure information of the application. The structure information includes at least one of an identifier of the application, an identifier of an application sub-module (for example, a microservice), and an identifier of a resource to which the application sub-module (for example, the microservice) belongs. When the at least one application sub-module of the application includes a plurality of copies, the identifier of the resource to which the application sub-module belongs may be an identifier of a resource to which each copy of the application sub-module belongs. The resource may be a physical machine (physical machine), or a virtual machine (virtual machine), a container (container), or the like deployed on the physical machine. Then, the application debugging system constructs a topology diagram of the application sub-modules of the application based on the structure information of the application. The topology diagram of the application sub-modules represents a calling relationship between the application sub-modules of the application.

Compared with that in which the application sub-modules of the application are presented in the form of a list, the topology diagram can further present the calling relationship between the application sub-modules, so as to assist the user in determining which application sub-module or application sub-modules is/are to be debugged.

In some possible implementations, considering that application sub-modules available to the application at different moments may change, an interaction module 102 may further obtain updated structure information, adjust a topology diagram of the application sub-modules of the application based on the updated structure information, and present an adjusted topology diagram of the application sub-modules to the user.

According to the method, the user can obtain a relatively new topology diagram as much as possible, so as to avoid that the user debugs a faulty application sub-module, thereby reducing debugging efficiency and wasting resources.

In some possible implementations, each application sub-module of the application corresponds to one agent, and the agent of each application sub-module is configured to receive a debugging instruction, and start debugging of the code block in the corresponding application sub-module according to the debugging instruction.

The application sub-module (for example, a microservice) generates a process during running, and an agent of the application sub-module is essentially equivalent to an independent thread hosted in the process during running. When the application debugging system debugs the application sub-module of the application, the foregoing process is not blocked, and interaction is directly performed by using a thread hosted in the process. In this way, the application sub-module can be debugged in the production environment.

In some possible implementations, it is considered that the debugging process is implemented based on a session, and the application debugging system may generate a plurality of debugging instructions based on the identifiers of the plurality of application sub-modules. The debugging instructions may include debug session establishment instructions. The application debugging system may establish a plurality of debug sessions with a plurality of agents of a plurality of to-be-debugged application sub-modules according to the plurality of debugging instructions, and obtains a debugging response of an agent of each to-be-debugged application sub-module, where the debugging response is used to generate the debugging result. In this way, the plurality of application sub-modules can be debugged.

By using the foregoing method, the plurality of application sub-modules can be directly debugged in the production environment, thereby greatly improving application debugging efficiency.

In some possible implementations, the debugging started by each agent is an independent thread in a running process of the corresponding application sub-module. When the application debugging system debugs the application sub-module of the application, the foregoing process is not blocked, and interaction is directly performed by using a thread hosted in the process. In this way, the application sub-module can be debugged in the production environment, so that an exception generated in the environment is avoided to be run in the development environment again, which increases a time cost because the code block is loaded to the IDE for local debugging and then the application is redeployed and brought online after the exception is rectified. Therefore, the debugging efficiency is further improved.

In some possible implementations, the production environment includes at least one node, and one or more application sub-modules of the application are deployed on each node. The application debugging system may route each debugging instruction to a node agent of a node on which each to-be-debugged application sub-module is located, so that the node agent routes each debugging instruction to an agent corresponding to each to-be-debugged application sub-module.

This provides help for the application debugging system to support debugging of a plurality of application debugging sub-modules at the same time, thereby improving application debugging efficiency.

In some possible implementations, the agent corresponding to each application sub-module and a node agent of each node are code blocks deployed in the production environment together with the application.

The agent corresponding to each application sub-module is configured to debug the corresponding application sub-module, and debugging processes may be performed at the same time. Therefore, the debugging efficiency may be improved. The node agent provides another transmission path (a transmission path other than a load balancing server) for a debugging instruction and a debugging response, so as to avoid that a debugging instruction for a same application sub-module is balanced to agents of different copies of the application sub-module. This ensures continuity of the debugging process, and improves availability in multi-copy scenarios.

In some possible implementations, each application sub-module of the application runs in an independent container, and the application sub-modules running in the containers interact with each other through interfaces of the containers. In the method, each application sub-module runs in an independent container, thereby ensuring independence of the application sub-module, and further ensuring independence of an agent of the application sub-module, so that the agents of the application sub-modules can debug the application sub-modules at the same time. This improves debugging efficiency.

In some possible implementations, the plurality of application sub-modules include code blocks written in different programming languages. Each debugging instruction is encapsulated as a debugging message, and the debugging message is routed to the agent corresponding to the to-be-debugged application sub-module. The agent corresponding to each application sub-module is configured to convert the debugging message into a debugging message corresponding to a programming language of the application sub-module.

The application debugging system may deploy a language debugging module of a corresponding programming language in an agent of a corresponding application sub-module, so as to debug a heterogeneous application.

According to a second aspect, this application provides an application debugging method. A to-be-debugged application is deployed in a production environment, and an application sub-module of the application runs in the production environment to provide a service. The method may be implemented by an interaction module of an application debugging system, for example, an IDE or a browser.

Specifically, the interaction module may present a list of application sub-modules of the application and/or a topology diagram of the application sub-modules to a user through a GUI. The list of application sub-modules and/or the topology diagram of the application sub-modules are/is used by the user to select a plurality of to-be-debugged application sub-modules. Then, the interaction module presents, to the user based on a debugging selection operation of the user in the GUI, a debugging result of the plurality of application sub-modules selected by the user.

The method can support debugging of the plurality of application sub-modules of the application at the same time. This improves debugging efficiency of the application. In the method, the user may directly perform debugging in the production environment. There is no need to reproduce, in the development environment, an exception generated during running of the application in the production environment. There is no need to load a code block included in the application sub-module to the IDE, and perform local debugging on the application in the development environment by using the IDE. There is also no need to redeploy the debugged application to the production environment. This saves time, further improves debugging efficiency, and improves debugging efficiency.

According to a third aspect, this application provides a method for presenting an application debugging result. A to-be-debugged application is deployed in a production environment, and an application sub-module of the application runs in the production environment to provide a service. The method may be implemented by an interaction module of an application debugging system, for example, an IDE or a browser.

Specifically, the interaction module receives the debugging selection operation of the user through a GUI, and then presents a debugging progress diagram of the application to the user in the GUI. The debugging progress diagram indicates debugging progress of the application debugging system on one or more application sub-modules selected by the user. The debugging progress diagram includes one or more types of the following information: a debugged application sub-module, an application sub-module being debugged, an application sub-module reporting a debugging error, a debugging error notification, a debugging error type, and a request/response flow of an application sub-module.

On one hand, the debugging progress diagram may help the user quickly learn a debugging status. On the other hand, the debugging progress diagram may provide a reference for the user to determine a next to-be-debugged application sub-module or a next group of to-be-debugged application sub-modules, and provide a reference to modify a code block of the application sub-module reporting the debugging error.

According to a fourth aspect, this application provides an application debugging system. A to-be-debugged application is deployed in a production environment, and an application sub-module included in the application runs in the production environment to provide a service. The system includes:
an interaction module, configured to receive identifiers of a plurality of application sub-modules that are input or selected by a user, where a code block included in each application sub-module is used to implement a function of the application; and
a debugging module, configured to debug code blocks of the plurality of application sub-modules based on the identifiers of the plurality of application sub-modules, where
the interaction module is further configured to present a debugging result to the user.

In some possible implementations, the interaction module is configured to:
present a debugging progress diagram of the application to the user through a GUI, where the debugging progress diagram includes one or more types of the following information: a debugged application sub-module, an application sub-module being debugged, an application sub-module reporting a debugging error, a debugging error notification, a debugging error type, and a request/response flow of an application sub-module.

In some possible implementations, the interaction module is configured to:
present stack information and/or a variable of the debugged application sub-module in a debugging process to the user.

In some possible implementations, the interaction module is specifically configured to:
receive the identifiers of the plurality of application sub-modules that are selected by the user through the graphical user interface GUI, or receive the identifiers of the plurality of application sub-modules that are input by the user through a command user interface CUI.

In some possible implementations, the interaction module is further configured to:
before the identifiers of the plurality of application sub-modules that are input or selected by the user are received, present a list of the application sub-modules of the application to the user through a user interface, and/or present a topology diagram of the application sub-modules of the application to the user through a user interface.

In some possible implementations, the interaction module is further configured to:
obtain structure information of the application; and
construct a topology diagram of application sub-modules of the application based on the structure information of the application, where the topology diagram of the application sub-modules represents a calling relationship between the application sub-modules of the application.

In some possible implementations, the interaction module is further configured to:
obtain updated structure information of the application;
adjust the topology diagram of the application sub-modules of the application based on the updated structure information; and
present an adjusted topology diagram of the application sub-modules to the user.

In some possible implementations, each application sub-module of the application corresponds to one agent, and the agent of each application sub-module is configured to receive a debugging instruction, and start debugging of the code block in the corresponding application sub-module according to the debugging instruction.

In some possible implementations, the interaction module is further configured to:
generate a plurality of debugging instructions based on the identifiers of the plurality of application sub-modules.

The debugging module is specifically configured to:
establish, according to the plurality of debugging instructions, a plurality of debug sessions with a plurality of agents of a plurality of to-be-debugged application sub-modules; and
obtain a debugging response of an agent of each to-be-debugged application sub-module, where the debugging response is used to generate the debugging result.

In some possible implementations, the debugging started by each agent is an independent thread in a running process of the corresponding application sub-module.

In some possible implementations, the production environment includes at least one node, one or more application sub-modules of the application are deployed on each node, and the debugging module is specifically configured to:
route each debugging instruction to a node agent of a node on which each to-be-debugged application sub-module is located, so that the node agent routes each debugging instruction to an agent corresponding to each to-be-debugged application sub-module.

In some possible implementations, the agent corresponding to each application sub-module and the node agent of each node are code blocks deployed in the production environment together with the application.

In some possible implementations, each application sub-module of the application runs in an independent container, and the application sub-modules running in the containers interact with each other through interfaces of the containers.

In some possible implementations, the plurality of application sub-modules include code blocks written in different programming languages, each debugging instruction is encapsulated as a debugging message, the debugging message is routed to the agent corresponding to the to-be-debugged application sub-module, and the agent corresponding to each application sub-module is configured to convert the debugging message into a debugging message corresponding to a programming language of the application sub-module.

According to a fifth aspect, this application provides a computing device, where the computing device includes a processor, a memory, and a display. The processor and the memory communicate with each other. The processor is configured to execute instructions stored in the memory, so that the computing device is enabled to perform the method according to any one of the implementations of the first aspect, the second aspect, or the third aspect.

According to a sixth aspect, this application provides a computer-readable storage medium, where the computer-readable storage medium stores computer program instructions, and when the computer program instructions are executed by a computing device, the computing device is enabled to perform the method in any implementation of the first aspect, the second aspect, or the third aspect.

According to a seventh aspect, this application provides a computer program product including instructions. When the computer program product is run on a computing device, the device is enabled to perform the method in any one of the implementations of the first aspect, the second aspect, or the third aspect.

In this application, based on the implementations provided in the foregoing aspects, further combination may be performed to provide more implementations.

### BRIEF DESCRIPTION OF DRAWINGS

To describe the technical methods in the embodiments of this application more clearly, the following briefly describes the accompanying drawings used in describing the embodiments.
FIG. 1 is an architectural diagram of an application debugging system according to an embodiment of this application;
FIG. 2A is a schematic diagram of an application scenario of an application debugging system according to an embodiment of this application;
FIG. 2B is a schematic diagram of an application scenario of an application debugging system according to an embodiment of this application;
FIG. 2C is a schematic diagram of an application scenario of an application debugging system according to an embodiment of this application;
FIG. 3 is a flowchart of an application debugging method according to an embodiment of this application;
FIG. 4 is a schematic diagram of a debugging selection interface according to an embodiment of this application;
FIG. 5 is a schematic diagram of another debugging selection interface according to an embodiment of this application;
FIG. 6 is a schematic diagram of a display interface of a debugging result according to an embodiment of this application; and
FIG. 7 is a schematic diagram of a structure of a computing device according to an embodiment of this application.

### DESCRIPTION OF EMBODIMENTS

The terms "first" and "second" in the embodiments of this application are merely intended for a purpose of description, and shall not be understood as an indication or implication of relative importance or implicit indication of a quantity of indicated technical features. Therefore, a feature limited to "first" and "second" may explicitly or implicitly include one or more of the features.

Some technical terms used in the embodiments of this application are first described.

An application (application, APP) is a set of computer programs written for a special application purpose of a user, and may be specifically application software formed by a single application program or a set of a plurality of application programs. For example, in the office field, the application may be a single text editing application, or may be an application including a text editing application, a table editing application, and a graphic editing application.

The application usually includes a plurality of application sub-modules. The application sub-module is a functional module that implements one or more functions by using a computer-executable code block. The application sub-module may be one or more source code files. The application sub-module can run in a production environment to provide a service. The production environment is an environment in which a service is formally provided. The production environment includes at least one node, and the node is a computing node that has a computing capability, such as a server or a terminal computing device.

Developers can use a microservice architecture (micro services architecture, MSA) to develop complex applications with various functions to improve development efficiency. The microservice architecture means that a function module of the application is split into independent microservices. Based on this, the application sub-module may be a microservice of the application. A microservice is a set of small and independent functional units. The microservices exchange data through interface calling. In this way, functional modules of the application can be decoupled. When a function needs to be added, deleted, or modified for an application, the developers only need to add, delete, or modify a corresponding microservice. The application sub-module may also be one or more microservices. The microservices run in the production environment to provide corresponding services.

If an application deployed in the production environment runs abnormally, the application usually needs to be debugged. Debugging refers to checking for errors in program code of an application through various means such as single step execution, breakpoint setting, and variable content printing.

Currently, in a related technology, a method for debugging an application that has been deployed in a production environment is usually loading program code of the application to an integrated development environment (integrated development environment, IDE), performing local debugging on the program code of the application in the development environment by using the IDE, and after the local debugging, redeploying and bringing the application online after the exception is rectified. This debugging mode for online applications has many problems. On the one hand, an exception generated during application running in the production environment may not be reproduced in the development environment, and a developer needs to perform additional work to reproduce, in the development environment, the exception generated during application running in the production environment, and debug program code of the application based on the exception. This increases debugging difficulty, and reduces the debugging efficiency. On the other hand, the program code of the application is loaded to the IDE for local debugging, and the application that has been debugged is redeployed to the production environment. This increases extra time costs and further reduces debugging efficiency. In addition, the developer debugs only one application sub-module of the application at a time. This greatly affects the debugging efficiency of the application. How to efficiently debug a rollout application (that is, the application has been deployed in the production environment) has become a major concern in the industry.

In view of this, an embodiment of this application provides a more efficient application debugging method. The method may be executed by an application debugging system. Specifically, for a to-be-debugged application deployed in the production environment, the application debugging system receives identifiers of a plurality of application sub-modules that are input or selected by a user, debugs code blocks of the plurality of application sub-modules based on the identifiers of the plurality of application sub-modules, and then presents a debugging result to the user.

The method can support the user in selecting a plurality of to-be-debugged application sub-modules at a time, so as to debug the plurality of application sub-modules of the application. This improves the debugging efficiency of the application. In the method, the user may directly perform debugging in the production environment, and does not need to reproduce, in the development environment, an exception generated during application running in the production environment, thereby improving debugging efficiency. In addition, in some embodiments, the method supports cloud debugging on the application. There is no need to load a code block included in the application sub-module to an IDE, and perform local debugging on the application in the development environment by using the IDE. There is also no need to redeploy a debugged application to the production environment. This saves time, and improves the debugging efficiency.

To make the technical solutions of this application clearer and easier to understand, the following describes, with reference to the accompanying drawings, a system architecture of an application debugging method provided in the embodiments of this application.

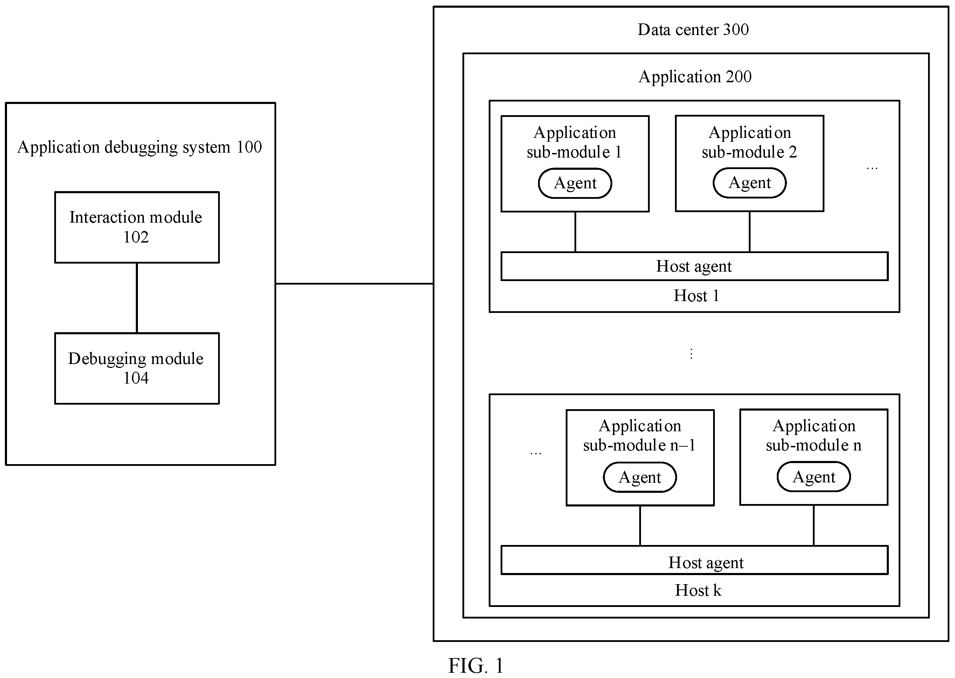

As shown in FIG. 1, a communication path is established between an application debugging system 100 and a data center 300, and the application debugging system 100 is configured to debug at least one application 200 deployed in the data center 300. The data center 300 provides a production environment, and the application 200 is deployed in the production environment. The application 200 includes a plurality of application sub-modules, and a code block included in each application sub-module is used to implement a function of the application 200.

The application sub-modules of the application 200 may be deployed on at least one node of the data center 300 in a distributed manner. For example, in the example in FIG. 1, n application sub-modules of the application 200 are deployed on k nodes (also referred to as hosts) in the data center in a distributed manner, where k is less than or equal to n. It should be noted that the application sub-module may be directly deployed on a node, that is, deployed in a physical machine, or may be deployed in a virtual machine or a container on the node. When each application sub-module of the application 200 is deployed in an independent container, the application sub-modules running in containers may interact with each other through interfaces of the containers.

Each application sub-module has a module agent (also referred to as a microservice agent when the application sub-module is a microservice), and each node has a node agent (host agent). In the embodiments of this application, the module agent is referred to as an agent (agent).

The agent is a code block deployed in the production environment together with the application 200. The code block is used to act as an agent for the application sub-module to interact with the outside and debug the application sub-module during running. The application sub-module (for example, the microservice) generates a process during running, and an agent of the application sub-module is essentially equivalent to an independent thread hosted in the process during running. When the application debugging system 100 debugs the application sub-module of the application, the foregoing process is not blocked, and interaction is directly performed by using a thread hosted in the process. In this way, the application sub-module can be debugged in the production environment.

In some implementations, the agent may be created in a code injection manner. Code injection is a technique for inserting standalone running code into a target process and making the standalone running code run. Usually, code injection can be implemented by configuring environment variables (environment variables). A Java platform is used as an example. An environment variable may be JAVA_TOOL_OPTIONS. An assigned value of the environment variable is a name of a code file to be inserted, for example, export JAVA_TOOL_OPTIONS="-agent-lib :hprof'. When a process of the application sub-module (such as a microservice) is started, code in the inserted code file is written into virtual memory space of the foregoing process, and a thread corresponding to the inserted code is also started as the process is started. The thread can always run before the process served as a host is terminated.

The host agent is a code block deployed in the production environment together with the application 200. The host agent is configured to forward a message from the application sub-module on the node or forward a message to the application sub-module on the node. A process can be generated when the host agent is running. The program code corresponding to the process may be deployed to the node when the code block included in the application sub-module of the application 200 is deployed to the node. When the process of the application sub-module on the node is started, the host agent is started accordingly.

The application debugging system 100 includes the interaction module 102 and a debugging module 104. The interaction module 102 is configured to receive identifiers of a plurality of application sub-modules that are input or selected by a user, for example, receive identifiers of a plurality of application sub-modules that are selected by the user through a graphical user interface (graphical user interface, GUI), or receive identifiers of a plurality of application sub-modules that are input by the user through a command user interface (command user interface, CUI). The debugging module 104 is configured to debug the code blocks of the plurality of application sub-modules based on the identifiers of the plurality of application sub-modules. The interaction module 102 is further configured to present a debugging result to the user.

In the embodiment shown in FIG. 1, the interaction module 102 may be an IDE that provides an application debugging function. The IDE not only can be used to edit program code of the application 200 and debug program code in a development process, but also can debug the remote online application 200. Alternatively, the interaction module 102 may be another interaction module that can provide a function of debugging the online application 200, for example, an interaction module loaded with a browser for debugging a user interface of the application 200 or an interaction module dedicated to application debugging. For ease of description, an example in which the interaction module 102 is the IDE is used below for description.

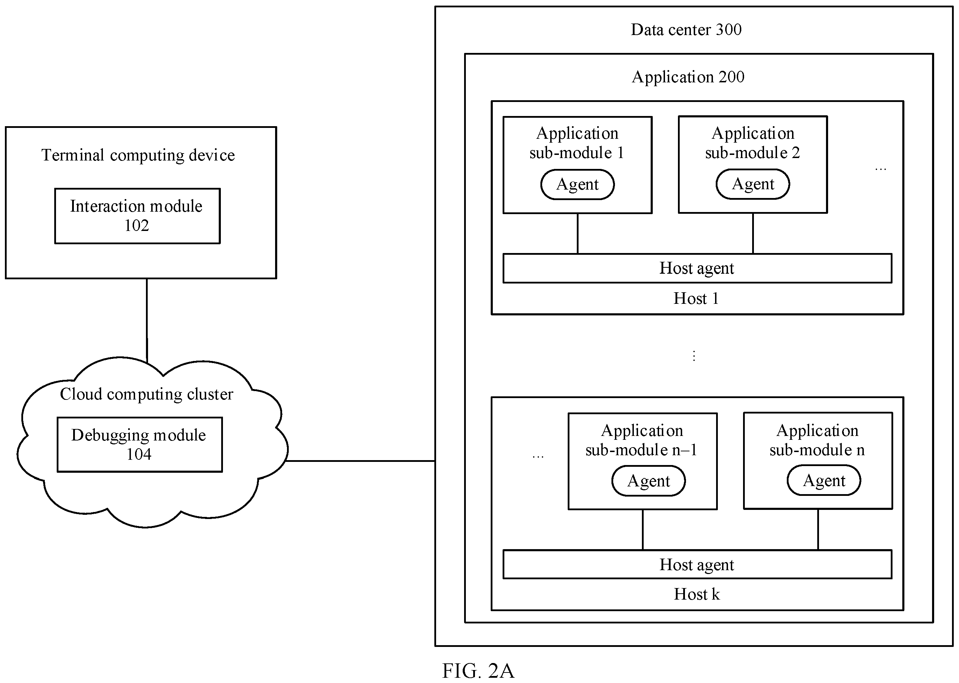

In some implementations, the modules of the application debugging system 100 may be deployed in different environments in a distributed manner. For example, as shown in FIG. 2A, the interaction module 102 may be deployed in a terminal computing device, and the debugging module 104 may be deployed in a cloud computing cluster (including at least one cloud computing device, for example, a cloud server).

In the scenario in FIG. 2A, the interaction module 102 may be a local IDE. The local environment is also referred to as a local device. The local device includes a terminal computing device (for example, a user terminal such as a notebook computer) under direct control of the user. The local IDE is an IDE that is installed on the local device as a client. In some examples, the local IDE may include visual studio, eclipse, and the like. The debugging module 104 may be a cloud debugger (cloud debugger). A plug-in may be installed in the local IDE, and the local IDE is connected to the cloud debugger by using the plug-in, so as to debug the application 200.

It should be noted that the local IDE usually has a local debugger, and the local debugger and the cloud debugger are independent of each other. Based on this, the user may debug the locally developed application program code by using the local debugger, and debug the online application 200 by using the cloud debugger.

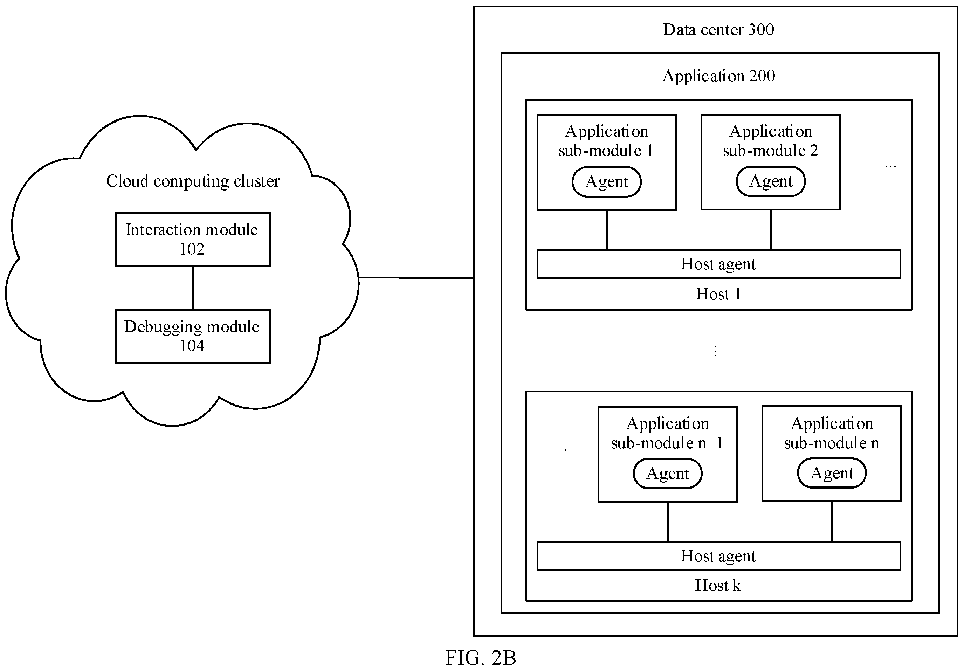

In some other implementations, the modules of the application debugging system 100 may also be deployed in a same environment. For example, as shown in FIG. 2B, the interaction module 102 and the debugging module 104 may be deployed in a same cloud computing cluster. For example, the cloud computing cluster is a public cloud provided by a cloud service provider. The interaction module 102 may be a cloud IDE (cloud IDE), and the debugging module 104 may be a cloud debugger.

A cloud service provider can integrate the cloud debugger and the cloud IDE into one cloud service for users to use, or provide two cloud services of the cloud IDE and the cloud debugger for users to use. In some cases, the cloud service provider may use the cloud debugger as a value-added service of the cloud IDE. After a user purchases or leases the value-added service, the cloud service provider combines the value-added service in the cloud IDE and provides the cloud IDE for the user.

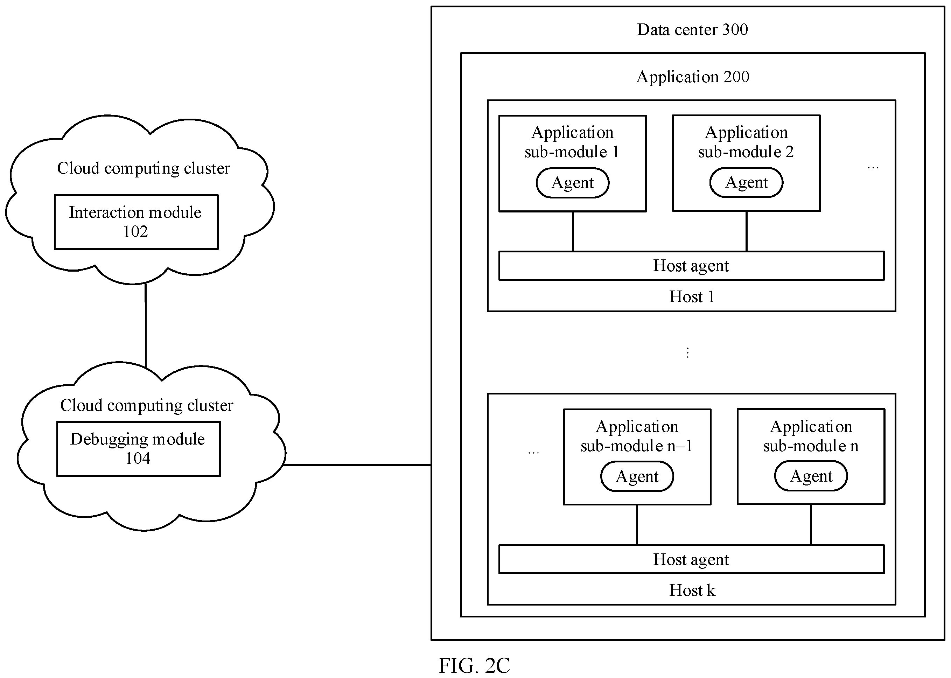

Certainly, as shown in FIG. 2C, the interaction module 102 and the debugging module 104 may also be deployed in different cloud computing clusters. For example, different cloud computing clusters are public clouds provided by different cloud service providers. The interaction module 102 is a cloud IDE, and the debugging module 104 is a cloud debugger. Different cloud service providers provide the cloud IDE and the cloud debugger for users.

Further, the application 200 debugged by the application debugging system 100 may be deployed in a same or different cloud computing cluster as the interaction module 102 and/or the debugging module 104, or may be independently deployed in any data center (for example, a data center owned by a user). FIG. 2A, FIG. 2B, and FIG. 2C show examples of a case in which the application 200 is deployed in the data center 300.

When the application 200 is deployed in a self-owned data center or a third-party data center in a cluster (for example, kubernetes, k8s), a user manually runs a command to run a group of daemon processes (daemon set) on each node of the cluster, such as log collection processes fluentd and logstash, system monitoring processes collectd and ganglia gmond, and system management processes kube-proxy and kube-dns. In this way, the host agent runs on the node.

When the application 200 and the cloud debugger are deployed in a same cloud computing cluster, a same cloud container engine (cloud container engine, CCE) may create and run a container, and an application sub-module of the application 200 runs in each container. Specifically, the CCE provides a container creation interface for the user, and the interface further bears a host agent deployment control. If the user selects the host agent deployment control, the CCE may automatically deploy the host agent on each node of the cluster when creating the container.

FIG. 1 is described by using an example in which only one replica (replica) is deployed for each application sub-module of the application 200. In some implementations, to ensure availability of the application sub-module, a plurality of copies may be deployed for at least one application sub-module of the application 200. Correspondingly, each copy includes one agent. The host agent may broadcast the debugging message to agents of a plurality of copies. Further, when the plurality of copies of one application sub-module are deployed on different nodes, the debugging module 104 first routes the debugging message to the different nodes, and then the host agents on the different nodes respectively broadcast the debugging message to the corresponding agents.

An agent of a copy of the application sub-module may start debugging of the application sub-module based on the debugging message (specifically, a debugging instruction in the debugging message), and generate a debugging response to the debugging instruction. The application debugging system 100 generates a debugging result based on the debugging response. In this way, the application sub-module can be debugged. It should be noted that, when returning the debugging response, the agent of the copy of the application sub-module may first return the debugging response to the host agent, and then the host agent return the debugging response to the application debugging system 100.

The host agent provides another transmission path (a transmission path other than the load balancing server) for the debugging instruction and the debugging response, so as to avoid that debugging instruction for a same application sub-module is balanced to agents of different copies of the application sub-module. This ensures continuity of a debugging process, and improves availability in multi-copy scenarios.

Next, the application debugging method provided in the embodiments of this application is described in detail from a perspective of the application debugging system 100.

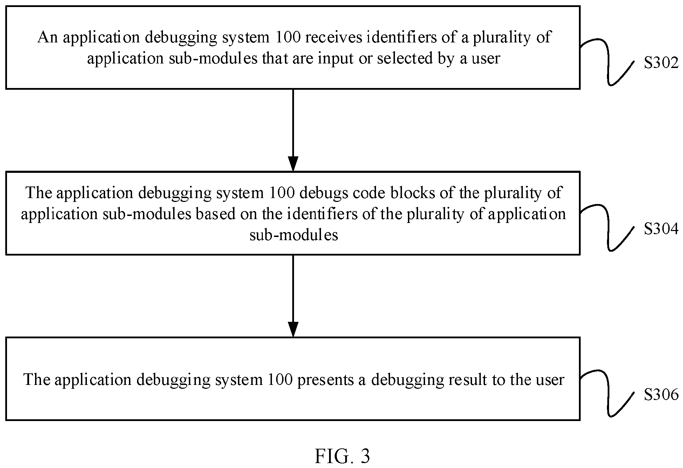

Refer to a flowchart of an application debugging method shown in FIG. 3. The method includes the following steps.

S302: The application debugging system 100 receives identifiers of a plurality of application sub-modules that are input or selected by a user.

The application debugging system 100 (which may be specifically the interaction module 102) may present a list of application sub-modules of the application 200 and/or a topology (topology) diagram of the application sub-modules of the application 200 to the user through the user interface. The topology diagram of the application sub-modules is used to identify a calling relationship between the application sub-modules of the application 200. The user may select a plurality of application sub-modules through the foregoing user interface (for example, a GUI), and the application debugging system 100 receives identifiers of the plurality of application sub-modules that are selected by the user through the user interface (for example, the GUI).

In some possible implementations, the user may directly input the identifiers of the plurality of application sub-modules through the foregoing user interface (for example, the CUI), and the interaction module 102 of the application debugging system 100 receives the identifiers of the plurality of application sub-modules that are input by the user through the user interface (for example, the CUI), so as to debug the plurality of application sub-modules.

The topology diagram presented by the interaction module 102 may be constructed based on structure information of the application 200. The structure information includes at least one of an identifier of the application, an identifier of an application sub-module (for example, a microservice), and an identifier of a resource to which the application sub-module (for example, the microservice) belongs. When at least one application sub-module of the application 200 includes a plurality of copies, the identifier of the resource to which the application sub-module belongs may be an identifier of a resource to which each copy of the application sub-module belongs. The resource may be a physical machine (physical machine), or a virtual machine (virtual machine), a container (container), or the like deployed on the physical machine. The structure information may be used to index an available application sub-module in the application 200.

In some implementations, the application debugging system 100 may further store structure information of the application, including any one or more of an identifier of the application, an identifier of an application sub-module, and an identifier of a resource. These identifiers may be stored in a form of a key-value pair (that is, key:value). For ease of understanding, the following provides description with reference to a specific example. In this example, the application 200 is an application based on a microservice architecture, and the structure information specifically includes the following information:
apps: appld:{appld}, {appName, appld}
tiers: appld:{appld}:tierld:{tierld}, {tierName, language, technologies, os}
resources: appId:{appId}:tierId:{tierId}:resourceId:{ resourceId}, {created, hostName, ip, ports, resourceId}.
"apps" indicates applications, "tiers" indicates microservices, and "resources" indicates resources. "appName" indicates a name of the application, and "appId" indicates the identifier of the application. The identifier of the application is unique. "appId" can be generated based on an identifier of a project projectId and appName. For example, "appId" may be obtained through processing by using a message digest (message digest 5, MD5) algorithm after projectId is cascaded with a default (default) field and appName. In an example, appId may be an MD5 value of {projectId } I default I { appName}. "tierId" indicates an identifier of the microservice, and "tierName" indicates a name of the microservice. "tierId" may be generated based on "tierName". For example, "tierId" may be obtained by using the MD5 algorithm based on the "tierName" and the default field. "resourceId" indicates an identifier of the resource, and may be obtained based on an identifier of the container containerId. For example, "resourceId" may be an MD5 value of containerId.

After the application sub-module of the application 200 is started, the agent of the application sub-module is started accordingly. The agent resides in a process of the application sub-module, and a lifetime of the agent is the same as the process of the application sub-module. When the application sub-module is still available, the agent may send the structure information to the application debugging system 100. The application debugging system 100 may store structure information, for example, store the structure information to a cache such as a Redis cache. In this way, the interaction module 102 may obtain the structure information from the Redis cache, and construct the topology diagram of the application sub-modules of the application based on the structure information.

When sending the structure information, the agent may first send the structure information to the host agent. The host agent may summarize structure information sent by different agents, and then store the summarized structure information. It is considered that available application sub-modules of the application 200 at different moments may change. The agent may further update the structure information. For example, the agent may periodically send the structure information, to update the structure information stored in the application debugging system 100. Correspondingly, the interaction module 102 may further obtain updated structure information, adjust the topology diagram of the application sub-modules of the application 200 based on the updated structure information, and present adjusted topology diagram of the application sub-modules 200 to the user.

A process of debugging the application 200 by the application debugging system 100 is implemented based on a debug session (debug session). The interaction module 102 may present a list of application sub-modules of the application 200 and/or a topology diagram of the application sub-modules of the application 200 to the user through the user interface after the user triggers a debug session establishment operation. The user may select a plurality of application sub-modules through the list of application sub-modules or the topology diagram. The application debugging system 100 establishes debug sessions respectively based on identifiers of the plurality of application sub-modules. For ease of understanding, the following uses the application 200 based on the microservice architecture as an example for description.

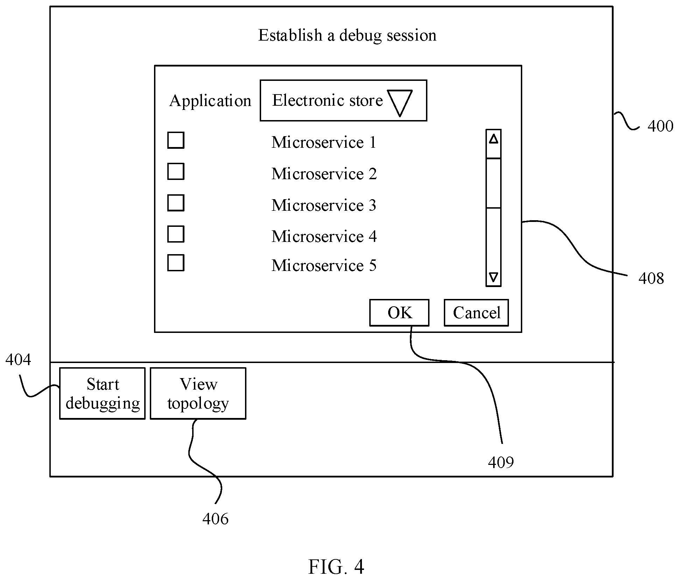

FIG. 4 provides a schematic diagram of a debugging selection interface. As shown in FIG. 4, a "Start debugging" control 404 is displayed in an interface 400. The "Start debugging" control 404 is configured to start debugging of the application and establish a debug session. Specifically, when the "Start debugging" control 404 is triggered (for example, clicked by a user), a debug session establishment page 408 is presented in the interface 400, for example, the debug session establishment page 408 is presented in a pop-up window manner. The debug session establishment page 408 provides an application selection control. After the application 200 is selected by using the application selection control, the debug session establishment page 408 displays a microservice list of the application 200. The list includes a microservice 1, a microservice 2, ..., and a microservice 5. The user can select a plurality of microservices from the microservice list to establish a plurality of debug sessions. Each debug session corresponds to a microservice.

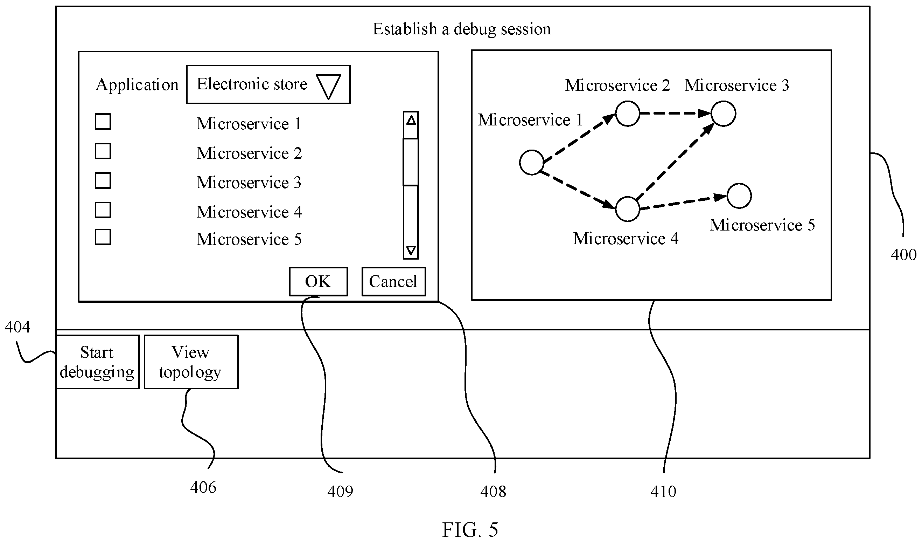

In some implementations, a "View topology" control 406 is further displayed in the interface 400. When the "View topology" control 406 is triggered, the "View topology" control 406 is configured to display a topology diagram of the microservices for the user to view. Refer to FIG. 5. When the "View topology" control 406 is triggered, a topology diagram 410 of microservices is further displayed in the interface 400. As shown in the topology diagram 410, circles represent microservices, and a dashed arrow between circles represents a calling relationship between the microservices. For example, in the example of the debugging selection interface in FIG. 5, the application 200 includes a plurality of microservices such as a microservice 1, a microservice 2, ..., and a microservice 5. The microservice 1 calls the microservice 2 and a microservice 4. The microservice 2 calls a microservice 3. The microservice 4 calls the microservice 3 and the microservice 5.

Compared with that in which the microservices of the application 200 are presented in a form of a list, a calling relationship between the microservices can be further presented by using the topology diagram 410, so as to assist the user in determining which microservice or microservices is/are to be debugged. FIG. 5 is described by using an example in which both a list and a topology diagram 410 are presented in an interface 400. In some implementations, the interface 400 may alternatively present either of the list and the topology diagram 410, and switch to the other by using a corresponding control when necessary.

In the embodiments shown in FIG. 4 and FIG. 5, an "OK" control 409 is further displayed on the debug session establishment page 408 in the interface 400. After selecting a plurality of microservices by using a microservice selection control, the user taps the "OK" control 409, and a debug session establishment operation for the selected microservices is triggered.

S304: The application debugging system 100 debugs the code blocks of the plurality of application sub-modules based on the identifiers of the plurality of application sub-modules.

When the user triggers the debug session establishment operation for the plurality of application sub-modules, the application debugging system 100 (which may be specifically the interaction module 102) may generate a plurality of debugging instructions based on the received identifiers of the plurality of application sub-modules. The debugging instructions include debug session establishment instructions. The application debugging system 100 may establish a plurality of debug sessions with the agents of the plurality of to-be-debugged application sub-modules according to the plurality of debug session establishment instructions.

The plurality of debug sessions are in a one-to-one correspondence with the agents of the plurality of application sub-modules. Each debug session has a unique debug session identifier (debug session ID). The interaction module 102 and the agent of the application sub-module may be uniquely determined based on the debug session identifier. The debug session identifier is carried in the debugging message, and it can be ensured that the debugging message can be correctly transmitted to the agent of the application sub-module or the interaction module 102.

In some implementations, the interaction module 102 may further present a breakpoint (breakpoint) setting control, a stack information viewing control, a variable display control, a variable tracing control, a single step execution control, or the like through a user interface such as a GUI. These controls may be presented by the debug session establishment page shown in FIG. 4, or may be presented by using an independent debugging configuration page. For example, the user may trigger a debugging operation such as breakpoint setting by using the foregoing controls presented on the independent debugging configuration page. The interaction module 102 generates debugging instructions based on the debugging operation triggered by the user by using the control. The debugging instructions include one or more of an instruction for setting a breakpoint, an instruction for viewing stack information, an instruction for displaying a variable, an instruction for tracing a variable, or an instruction for single step execution. Each debugging instruction may be encapsulated in a plurality of debugging messages.

The debugging module 104 may send a plurality of debugging messages to agents of the plurality of application sub-modules. The agent receives the debugging message, may obtain a debugging instruction, and starts debugging of a code block of a corresponding application sub-module according to the debugging instruction. Correspondingly, the agent of the application sub-module may generate a debugging response. The interaction module 102 may further obtain a debugging response of an agent of each to-be-debugged application sub-module, generate a debugging result based on the debugging response, and present a debugging result to the user.

For ease of understanding, the following provides detailed description with reference to a specific debugging instruction.

When the debugging instruction is the instruction for setting the breakpoint, the debugging module 104 routes the debugging message encapsulated with the instruction and carrying a debug session ID to the agent of the corresponding application sub-module. After receiving the instruction for setting the breakpoint, the agent may set the breakpoint. When the agent execution reaches a breakpoint position, the execution stops. The agent may further return a debugging response, and the debugging response is specifically an actual breakpoint position.

When the debugging instruction is the instruction for displaying the variable, the debugging module 104 routes the debugging message encapsulated with the instruction and carrying a debug session ID to the agent of the corresponding application sub-module. After receiving the instruction for displaying the variable, the agent can print (print) the value of the variable. The agent may further return a debugging response, and the debugging response is specifically a value of a variable.

When the debugging instruction is the instruction for viewing stack information, the debugging module 104 routes the debugging message encapsulated with the instruction and carrying a debug session ID to the agent of the corresponding application sub-module. After receiving the instruction for viewing stack information, the agent may obtain the stack information, for example, obtain an identifier of a function that has been executed in a call stack (call stack) and/or an identifier of a function that is currently being executed. The agent may further return a debugging response to the debugging module 104, where the debugging response is specifically stack information.

Further, after setting the breakpoint and tracing the variable, the user may further trigger a debugging operation through a breakpoint deleting control and a tracing canceling control that are presented in the user interface, and generate the debugging instruction. The debugging instruction may include an instruction for deleting a breakpoint (deleting one or all breakpoints) and/or an instruction for canceling tracing a variable.

When the debugging instruction is the instruction for deleting the breakpoint, the debugging module 104 routes the debugging message encapsulated with the instruction and carrying a debug session ID to the agent of the corresponding application sub-module. After receiving the instruction for deleting the breakpoint, the agent can delete the corresponding breakpoint to prevent the agent from stopping execution at the corresponding position. The agent may further return a debugging response, and the debugging response is used to indicate that the deletion succeeds.

When the debugging instruction is the instruction for canceling tracing the variable, the debugging module 104 routes the debugging message encapsulated with the instruction and carrying a debug session ID to the agent of the corresponding application sub-module. The agent receives the instruction for canceling tracing the variable and cancels tracing the variable. The agent may further return a debugging response, where the debugging response is used to indicate that the cancellation succeeds.

In some possible implementations, the debugging module 104 may first detect whether a debug session corresponding to each debugging instruction exists, and if the debug session corresponding to each debugging instruction exists, route each debugging instruction and a corresponding debug session ID to an agent of a corresponding application sub-module, or if the debug session corresponding to each debugging instruction does not exist, establish a corresponding debug session according to the debugging instruction, and then, route each debugging instruction and the corresponding debug session ID to the agent of the corresponding microservice. After receiving the debugging instruction, the agent starts debugging the corresponding microservice. Then, the interaction module 102 obtains a debugging response of the corresponding agent, where the debugging response may be used to generate a debugging result. In this way, debugging of the application sub-module can be implemented.

It should be noted that the application debugging system 100 may include a plurality of interaction modules 102, for example, include a plurality of IDEs. The plurality of users may debug a plurality of application sub-modules of the application 200 at the same time through respective interaction modules 102 such as IDE. Different users may debug the same application sub-module of the application 200, or debug different application sub-modules of the application 200.

When the plurality of users trigger operations on the same application sub-module through their respective interaction modules 102, the application debugging system 100 (which may be specifically the debugging module 104) may establish debug sessions for the plurality of users respectively. The debug sessions are in a one-to-one correspondence with the debugged application sub-modules and the interaction modules 102 (or the users) that initiate the debugging process. For example, when each user of n users triggers an operation for m application sub-modules, the debugging module 104 of the application debugging system 100 creates n*m debug sessions based on the operations of the n users. n is greater than or equal to 1, and m is greater than or equal to 1.

S306: The application debugging system 100 presents a debugging result to the user.

The debugging result includes an intermediate debugging result and/or a final debugging result. In a debugging process, the application debugging system 100 (specifically, the interaction module 102) displays an intermediate debugging result. The intermediate debugging result is used to represent a result generated in a debugging process. The result generated in the debugging process can be represented by a debugging progress diagram. After debugging is completed, the application debugging system 100 (specifically, the interaction module 102) displays the final debugging result. The final debugging result is used to represent a debugging success or a debugging failure.

The debugging progress diagram includes one or more types of the following information: a debugged application sub-module, an application sub-module being debugged, an application sub-module reporting a debugging error, a debugging error notification, a debugging error type, and a request/response flow of an application sub-module. Reporting a debugging error means that an error occurs in a code block of the application sub-module in a running process, and the application debugging system 100 detects the error through debugging and reports the error to the user.

Further, the interaction module 102 of the application debugging system 100 may further present stack information and/or a variable of the debugging process of the application sub-module to the user. Specifically, the interaction module 102 may dynamically present the stack information and/or a variable of the debugging process based on the debugging progress.

The interaction module 102 of the application debugging system 100 may present the debugging result to the user through a GUI or a CUI. For ease of description, the following uses an example in which the application debugging system 100 debugs the application 200 that is based on the microservice architecture and presents the debugging result through the GUI for description.

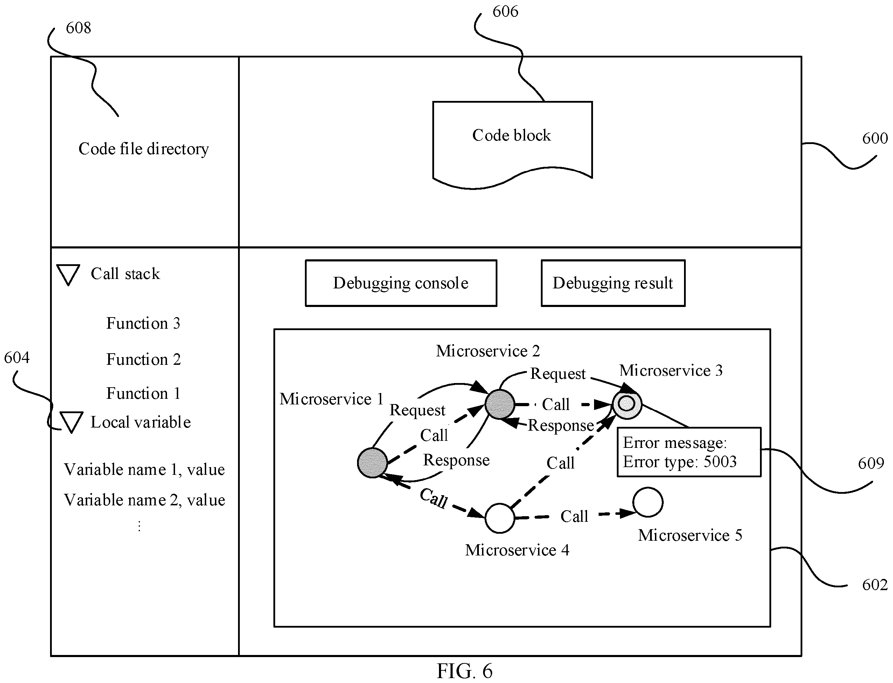

Refer to a schematic diagram of an interface for displaying a debugging result shown in FIG. 6. The interface 600 presents a "Debugging result" control. When the "Debugging result" control is triggered, for example, triggered by clicking by a user, the interface 600 displays a debugging progress diagram 602. The debugging progress diagram 602 includes a debugged microservice, a microservice being debugged, a microservice reporting a debugging error, a debugging error notification, a debugging error type, and a request/response flow of a microservice.

The debugged microservice, the microservice being debugged, the microservice reporting the debugging error can be distinguished by text, symbol, color, shape, or the like. Specifically, the interaction module 102 may adjust colors of identifiers of the microservices in a microservice topology, to identify, from microservices of the application 200, the debugged microservice and the microservice being debugged. For example, the interaction module 102 adjusts colors of the identifiers of the microservice 1 and the microservice 2 from gray to green, to indicate that the microservice 1 and the microservice 2 have been debugged, and adjusts a color of the microservice 3 from gray to yellow, to indicate that the microservice 3 is being debugged. When the debugging progress diagram is a grayscale diagram, the debugged microservice and the microservice being debugged may be further identified based on different grayscales.

The interaction module 102 may further identify, from the microservices of the application 200 by using the debugging error notification, the microservice reporting the debugging error. For example, the microservice 3 is connected to an error message box 609 by using a connection line, and the error message box 609 includes a debugging error notification. Therefore, the microservice 3 may be identified as the microservice reporting the debugging error. The debugging error notification includes the debugging error type, for example, error types such as a missing parameter, a parameter type error, or a parameter verification exception. In this example, the debugging error type of the microservice 3 is 5003, which is used to indicate the parameter verification exception.

Further, the interaction module 102 may further add the request/response flow of the microservice to the topology diagram, to assist in describing debugging progress of the microservice. For example, if a request flow (a data flow formed by a debugging instruction) flows in or a response flow (a data flow formed by a debugging response) flows out, the microservice has been debugged or is being debugged. If neither a request flow nor a response flow flows out, the microservice has not been debugged.

Based on the foregoing request/response flow, the user can determine the next microservice or the next group of microservices to be debugged. In the example in FIG. 6, the request flow and the response flow represent that debugging has been started for the microservice 1, the microservice 2, and the microservice 3, that is, debugging has been started for a branch of the application 200. Next, the user may determine to debug another branch of the application 200. The other branch may be a branch formed by the microservice 1, the microservice 4, and the microservice 3, or a branch formed by the microservice 1, the microservice 4, and the microservice 5. Because debugging has been started for the microservice 1, the user may determine to debug the microservice 4.

For the microservice being debugged, the interaction module 102 may further identify a debugging type of the microservice by modifying a shape of an identifier of the microservice in the topology diagram, for example, add a circle to an identifier of the microservice 3 to indicate that breakpoint debugging is being performed on the microservice 3. In some implementations, the interaction module 102 may alternatively change the identifier of the microservice to a square, to indicate that single step debugging is being performed on the microservice.

In some implementations, the interface 600 may further present stack information 603 and/or a value 604 of a variable. The stack information 603 may include identifiers of functions (a function 1 and a function 2 in this example) that have been executed in the call stack. Further, the stack information 603 may further include information such as an identifier of a currently executed function (a function 3 in this example). The value 604 of the variable may be specifically presented by using a key-value pair (key value). As shown in FIG. 6, the interface 600 may further present a name of a local variable, a value of the local variable, and the like.

It should be noted that the stack information 603 and/or the value 604 of the variable that are presented in the interface 600 may change with a debugging process. For example, when the microservice 2 is debugged, the interface 600 presents a function that has been executed and a function that is currently being executed in the call stack of the microservice 2, and presents values of local variables related to these functions. When the microservice 3 is debugged, the interface 600 presents a function that has been executed and a function that is currently being executed in the call stack of the microservice 3, and presents values of local variables related to these functions.

Further, a code block 606 may be further presented in the interface 600. The user may determine a theoretical value of the variable based on the code block 606, and determine, based on the theoretical value and the value 604 of the variable displayed in the interface 600, whether the corresponding code block 606 is abnormal. In some implementations, the interface 600 further includes a code file directory 608. The code file directory 608 may be configured to quickly jump between different code blocks 606 (or different source code files) of the application 200, so that a code block 606 of another microservice can be quickly jumped to for debugging.

A debugging console control is further displayed in the interface 600. When the debugging console is triggered, the debugging console control is switched to, so that the user continues to debug the application 200 based on the debugging console, for example, debug another micro service of the application 200.

Based on the foregoing content description, an embodiment of this application provides an application debugging method. In the method, the application debugging system 100 receives identifiers of a plurality of application sub-modules that are input or selected by the user, debugs code blocks of the plurality of application sub-modules based on the identifiers of the plurality of application sub-modules, and then presents a debugging result to the user. The method supports debugging of the plurality of application sub-modules of the application 200 at the same time. This improves debugging efficiency. In addition, the user may directly debug the application sub-module of the application 200 in the production environment. There is no need to reproduce, in the development environment, an exception generated when the application 200 runs in the production environment. There is also no need to load a code block to the IDE for local debugging, or redeploy the debugged application 200 in the production environment. This further improves the debugging efficiency.

In some implementations, the debugging instruction routed by the application debugging system 100 to the agent is carried in the debugging message. The debugging message may be a message based on a debug adapter protocol (debug adapter protocol). Therefore, the agent may further convert the standard DAP debugging message into a debugging message corresponding to an upper-layer application, and specifically, a debugging message corresponding to a technology stack (or a programming language) of an upper-layer microservice. For example, when the debugged application sub-module is developed based on a Java technology stack (or a Java language), the agent may convert the standard DAP debugging message into a debugging message based on a Java debug interface (java debug interface, JDI).

To implement the foregoing conversion process, the agent may pre-deploy a language debugging module corresponding to an upper-layer application sub-module such as a technology stack (or a programming language) of a microservice. Specifically, the application debugging system 100 may store a language debugging module corresponding to at least one technology stack, for example, a language debugging module corresponding to a C technology stack, a Python technology stack, or a Java technology stack. The language debugging module may be specifically stored in a cloud container engine (cloud container engine, CCE) storage volume (storage volume) or a Hadoop distributed file system (hadoop distributed file system, HDFS).

The application debugging system 100 may receive a language debugging module deployment request from an agent, then obtain, in response to the language debugging module deployment request, program code of the language debugging module requested by the agent, and send the program code of the language debugging module to the agent, so as to deploy a corresponding language debugging module in the agent.

The application 200 may be a heterogeneous application. In other words, the plurality of application sub-modules of the application 200 may include code blocks written based on a programming language. Correspondingly, the application debugging system 100 may deploy a language debugging module of a corresponding programming language in a corresponding agent, so as to debug a heterogeneous application.

The foregoing describes in detail the application debugging method provided in the embodiments of this application with reference to FIG. 1 to FIG. 6. The following describes, with reference to the accompanying drawings, an application debugging system 100 and a related device that are provided in the embodiments of this application.

Refer to a schematic diagram of a structure of an application debugging system 100 shown in FIG. 1. A to-be-debugged application is deployed in a production environment, and an application sub-module included in the application runs in the production environment to provide a service. The system 100 includes:
an interaction module 102, configured to receive identifiers of a plurality of application sub-modules that are input or selected by a user, where a code block included in each application sub-module is used to implement a function of the application; and
a debugging module 104, configured to debug the code blocks of the plurality of application sub-modules based on the identifiers of the plurality of application sub-modules.

The interaction module 102 is further configured to present a debugging result to the user.

In some possible implementations, the interaction module 102 is configured to:
present a debugging progress diagram of the application to the user through a GUI, where the debugging progress diagram includes one or more types of the following information: a debugged application sub-module, an application sub-module being debugged, an application sub-module reporting a debugging error, a debugging error notification, a debugging error type, and a request/response flow of an application sub-module.

In some possible implementations, the interaction module 102 is configured to:
present stack information and/or a variable of the debugged application sub-module in a debugging process to the user.

In some possible implementations, the interaction module 102 is specifically configured to:
receive the identifiers of the plurality of application sub-modules that are selected by the user through the graphical user interface GUI, or receive the identifiers of the plurality of application sub-modules that are input by the user through a command user interface CUI.

In some possible implementations, the interaction module 102 is further configured to:
before the identifiers of the plurality of application sub-modules that are input or selected by the user are received, present a list of application sub-modules of the application to the user through the user interface, and/or present a topology diagram of the application sub-modules of the application to the user through the user interface.

In some possible implementations, the interaction module 102 is further configured to:
obtain structure information of the application; and
construct the topology diagram of the application sub-modules of the application based on the structure information of the application, where the topology diagram of the application sub-modules represents a calling relationship between the application sub-modules of the application.

In some possible implementations, the interaction module 102 is further configured to:
obtain updated structure information of the application;
adjust the topology diagram of the application sub-modules of the application based on the updated structure information; and
present an adjusted topology diagram of the application sub-modules to the user.

In some possible implementations, each application sub-module of the application corresponds to an agent, and the agent of each application sub-module is configured to receive a debugging instruction, and start debugging of the code block in the corresponding application sub-module according to the debugging instruction.

In some possible implementations, the interaction module 102 is further configured to:
generate a plurality of debugging instructions based on the identifiers of the plurality of application sub-modules.

The debugging module 104 is specifically configured to:
establish a plurality of debug sessions with a plurality of agents of a plurality of to-be-debugged application sub-modules according to the plurality of debugging instructions; and
obtain a debugging response of an agent of each to-be-debugged application sub-module, where the debugging response is used to generate the debugging result.

In some possible implementations, the debugging started by each agent is an independent thread in a running process of the corresponding application sub-module.

In some possible implementations, the production environment includes at least one node, one or more application sub-modules of the application are deployed on each node, and the debugging module 104 is specifically configured to:
route each debugging instruction to a node agent of a node on which each to-be-debugged application sub-module is located, so that the node agent routes each debugging instruction to an agent corresponding to each to-be-debugged application sub-module.

In some possible implementations, the agent corresponding to each application sub-module and the node agent of each node are code blocks deployed in the production environment together with the application.

In some possible implementations, each application sub-module of the application runs in an independent container, and the application sub-modules running in containers interact with each other through interfaces of the containers.

In some possible implementations, the plurality of application sub-modules include code blocks written in different programming languages, each debugging instruction is encapsulated as a debugging message, the debugging message is routed to the agent corresponding to the to-be-debugged application sub-module, and the agent corresponding to each application sub-module is configured to convert the debugging message into a debugging message corresponding to a programming language of the application sub-module.

The application debugging system 100 according to this embodiment of this application may correspondingly perform the methods described in the embodiments of this application, and the foregoing and other operations and/or functions of the modules/units of the application debugging system 100 are separately used to implement corresponding procedures of the methods in the embodiment shown in FIG. 3. For brevity, details are not described herein again.

An embodiment of this application further provides a computing device 700. The computing device 700 may be an end-side device such as a notebook computer or a desktop computer, or may be a cloud computing device (for example, a cloud server) in a cloud environment, or may be a combination of an end-side device and a cloud computing device. The computing device 700 is specifically configured to implement a function of the application debugging system 100 in the embodiment shown in FIG. 1.

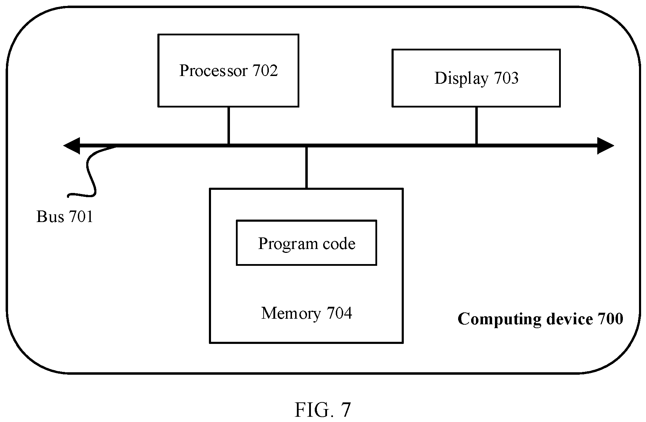

FIG. 7 provides a schematic diagram of a structure of a computing device 700. As shown in FIG. 7, the computing device 700 includes a bus 701, a processor 702, a display 703, and a memory 704. The processor 702, the memory 704, and the display 703 communicate with each other by using the bus 701.

The bus 701 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 7, but this does not mean that there is only one bus or only one type of bus.

The processor 702 may be any one or more of processors such as a central processing unit (central processing unit, CPU), a graphics processing unit (graphics processing unit, GPU), a microprocessor (micro processor, MP), or a digital signal processor (digital signal processor, DSP).

The display 703 is an input/output (input/output, I/O) device. The device can display electronic files such as images and texts on the screen for users to view. Based on different manufacturing materials, the display 703 may be classified into a liquid crystal display (liquid crystal display, LCD), an organic light emitting diode (organic light emitting diode, OLED) display, and the like. Specifically, the display 703 may receive identifiers of a plurality of application sub-modules that are input or selected by the user, and present a debugging result to the user, and the like.

The memory 704 may include a volatile memory (volatile memory), for example, a random access memory (random access memory, RAM). The memory 704 may further include a non-volatile memory (non-volatile memory), for example, a read-only memory (read-only memory, ROM), a flash memory, a hard disk drive (hard drive, HDD), or a solid state drive (solid state drive, SSD).

The memory 704 stores executable program code, and the processor 702 executes the executable program code to implement a function of the foregoing application debugging system 100, or performs the application debugging method described in the foregoing embodiment. Specifically, the processor 702 executes the foregoing program code, so as to control the display 703 to receive, through the GUI, the identifiers of the plurality of application sub-modules that are selected by the user, or receive, through the CUI, the identifiers of the plurality of application sub-modules that are input by the user. Then, the display 703 transmits, to the processor 702 through the bus 701, the identifiers of the plurality of application sub-modules that are selected or input by the user. The processor 702 debugs the code blocks of the plurality of application sub-modules based on the identifiers of the plurality of application sub-modules, and controls the display 703 to present a debugging result to the user.

In some possible implementations, the processor 702 may further control another interface to receive the identifiers of the plurality of application sub-modules. The another interface may be a microphone or the like. Specifically, the microphone may receive the identifiers of the application sub-modules that are represented in a voice form.

In some possible implementations, the processor 702 may further perform method steps corresponding to any implementation provided in the foregoing method embodiments. Details are not described herein again.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct a computing device to perform the foregoing application debugging method applied to the application debugging system 100.

An embodiment of this application further provides a computer program product. The computer program product includes one or more computer instructions. When the computer instructions are loaded and executed on a computer device, the procedure or functions according to the embodiments of this application are all or partially generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing application debugging method needs to be used, the computer program product may be downloaded and executed on a computing device.

Descriptions of procedures or structures corresponding to the foregoing accompanying drawings have respective focuses. For a part that is not described in detail in a procedure or structure, refer to related descriptions of other procedures or structures.

## Claims

1. An application debugging method, wherein a to-be-debugged application is deployed in a production environment, the application runs in the production environment to provide a service, and the method comprises:
receiving identifiers of a plurality of application sub-modules that are input or selected by a user, wherein a code block comprised in each application sub-module is used to implement a function of the application;
debugging code blocks of the plurality of application sub-modules based on the identifiers of the plurality of application sub-modules; and
presenting a debugging result to the user.

2. The method according to claim 1, wherein the presenting a debugging result to the user comprises:
presenting a debugging progress diagram of the application to the user through a graphical user interface GUI, wherein the debugging progress diagram comprises one or more types of the following information: a debugged application sub-module, an application sub-module being debugged, an application sub-module reporting a debugging error, a debugging error notification, a debugging error type, and a request/response flow of an application sub-module.

3. The method according to claim 1 or 2, wherein the presenting a debugging result to the user comprises:
presenting stack information and/or a variable of the debugged application sub-module in a debugging process to the user.

4. The method according to any one of claims 1 to 3, wherein the receiving identifiers of a plurality of application sub-modules that are input or selected by a user comprises: receiving the identifiers of the plurality of application sub-modules that are selected by the user through the graphical user interface GUI, or receiving the identifiers of the plurality of application sub-modules that are input by the user through a command user interface CUI.

5. The method according to any one of claims 1 to 4, wherein before the receiving identifiers of a plurality of application sub-modules that are input or selected by a user, the method further comprises:
presenting a list of application sub-modules of the application to the user through the user interface, and/or presenting a topology diagram of the application sub-modules of the application to the user through the user interface.

6. The method according to any one of claims 1 to 5, wherein the method further comprises:
constructing the topology diagram of the application sub-modules of the application, wherein the topology diagram of the application sub-modules represents a calling relationship between the application sub-modules of the application.

7. The method according to any one of claims 1 to 6, wherein the method further comprises:
adjusting the topology diagram of the application sub-modules of the application; and
presenting an adjusted topology diagram of the application sub-modules to the user.

8. The method according to any one of claims 1 to 7, wherein each application sub-module of the application corresponds to an agent, and the agent of each application sub-module is configured to receive a debugging instruction, and start debugging of the code block in the corresponding application sub-module according to the debugging instruction.

9. The method according to claim 8, wherein the debugging code blocks of the plurality of application sub-modules comprises:
generating a plurality of debugging instructions based on the identifiers of the plurality of application sub-modules;
establishing, according to the plurality of debugging instructions, a plurality of debug sessions with a plurality of agents of a plurality of to-be-debugged application sub-modules; and
obtaining a debugging response of an agent of each to-be-debugged application sub-module, wherein the debugging response is used to generate the debugging result.

10. The method according to claim 8 or 9, wherein the debugging started by each agent is an independent thread in a running process of the corresponding application sub-module.

11. The method according to claim 9, wherein the production environment comprises at least one node, one or more application sub-modules of the application are deployed in each node, and the establishing, according to the plurality of debugging instructions, a plurality of debug sessions with a plurality of agents of a plurality of to-be-debugged application sub-modules comprises:
routing each debugging instruction to a node agent of a node on which each to-be-debugged application sub-module is located, so that the node agent routes each debugging instruction to an agent corresponding to each to-be-debugged application sub-module.

12. The method according to claim 11, wherein the agent corresponding to each application sub-module and a node agent of each node are code blocks deployed in the production environment together with the application.

13. The method according to any one of claims 1 to 12, wherein each application sub-module of the application runs in an independent container, and the application sub-modules running in containers interact with each other through interfaces of the containers.

14. The method according to any one of claims 8 to 13, wherein the plurality of application sub-modules comprise code blocks written in different programming languages, each debugging instruction is encapsulated as a debugging message, the debugging message is routed to the agent corresponding to the to-be-debugged application sub-module, and the agent corresponding to each application sub-module is configured to convert the debugging message into a debugging message corresponding to a programming language of the application sub-module.

15. An application debugging method, wherein a to-be-debugged application is deployed in a production environment, an application sub-module of the application runs in the production environment to provide a service, and the method comprises:
presenting a list of the application sub-modules of the application and/or a topology diagram of the application sub-modules to a user through a graphical user interface GUI, wherein the list of the application sub-modules and/or the topology diagram of the application sub-modules are/is used by the user to select a plurality of to-be-debugged application sub-modules; and
presenting, to the user based on a debugging selection operation of the user in the GUI, a debugging result of the plurality of application sub-modules selected by the user.

16. A method for presenting an application debugging result, wherein a to-be-debugged application is deployed in a production environment, an application sub-module of the application runs in the production environment to provide a service, and the method comprises:
receiving a debugging selection operation of a user through a graphical user interface GUI; and
presenting, in the GUI, a debugging progress diagram of the application to the user, wherein the debugging progress diagram indicates debugging progress of an application debugging system on one or more application sub-modules selected by the user, and the debugging progress diagram comprises one or more types of the following information: a debugged application sub-module, an application sub-module being debugged, an application sub-module reporting a debugging error, a debugging error notification, a debugging error type, and a request/response flow of an application sub-module.

17. An application debugging system, wherein a to-be-debugged application is deployed in a production environment, the application runs in the production environment to provide a service, and the application debugging system comprises:
an interaction module, configured to receive identifiers of a plurality of application sub-modules that are input or selected by a user, wherein a code block comprised in each application sub-module is used to implement a function of the application; and
a debugging module, configured to debug code blocks of the plurality of application sub-modules based on the identifiers of the plurality of application sub-modules, wherein
the interaction module is further configured to present a debugging result to the user.

18. The system according to claim 17, wherein the interaction module is configured to:
present a debugging progress diagram of the application to the user through a graphical user interface GUI, wherein the debugging progress diagram comprises one or more types of the following information: a debugged application sub-module, an application sub-module being debugged, an application sub-module reporting a debugging error, a debugging error notification, a debugging error type, and a request/response flow of an application sub-module.

19. The system according to claim 17 or 18, wherein the interaction module is configured to:
present stack information and/or a variable of the debugged application sub-module in a debugging process to the user.

20. The system according to any one of claims 17 to 19, wherein the interaction module is specifically configured to:
receive the identifiers of the plurality of application sub-modules that are selected by the user through the graphical user interface GUI, or receive the identifiers of the plurality of application sub-modules that are input by the user through a command user interface CUI.

21. The system according to any one of claims 17 to 20, wherein the interaction module is further configured to:
before the identifiers of the plurality of application sub-modules that are input or selected by the user are received, present a list of the application sub-modules of the application to the user through the user interface, and/or present a topology diagram of the application sub-modules of the application to the user through the user interface.

22. The system according to any one of claims 17 to 21, wherein the interaction module is further configured to:
construct the topology diagram of the application sub-modules of the application, wherein the topology diagram of the application sub-modules represents a calling relationship between the application sub-modules of the application.

23. The system according to any one of claims 17 to 22, wherein the interaction module is further configured to:
adjust the topology diagram of the application sub-modules of the application; and
present an adjusted topology diagram of the application sub-modules to the user.

24. The system according to any one of claims 17 to 23, wherein each application sub-module of the application corresponds to an agent, and the agent of each application sub-module is configured to receive a debugging instruction, and start debugging of the code block in the corresponding application sub-module according to the debugging instruction.

25. The system according to claim 24, wherein the interaction module is further configured to generate a plurality of debugging instructions based on the identifiers of the plurality of application sub-modules; and
the debugging module is specifically configured to: establish a plurality of debug sessions with a plurality of agents of a plurality of to-be-debugged application sub-modules according to the plurality of debugging instructions; and obtain a debugging response of an agent of each to-be-debugged application sub-module, wherein the debugging response is used to generate the debugging result.

26. The system according to claim 24 or 25, wherein the debugging started by each agent is an independent thread in a running process of the corresponding application sub-module.

27. The system according to claim 25, wherein the production environment comprises at least one node, one or more application sub-modules of the application are deployed on each node, and the debugging module is specifically configured to:
route each debugging instruction to a node agent of a node on which each to-be-debugged application sub-module is located, so that the node agent routes each debugging instruction to an agent corresponding to each to-be-debugged application sub-module.

28. The system according to claim 27, wherein the agent corresponding to each application sub-module and the node agent of each node are code blocks deployed in the production environment together with the application.

29. The system according to any one of claims 17 to 28, wherein each application sub-module of the application runs in an independent container, and the application sub-modules running in containers interact with each other through interfaces of the containers.

30. The system according to any one of claims 24 to 29, wherein the plurality of application sub-modules comprise code blocks written in different programming languages, each debugging instruction is encapsulated as a debugging message, the debugging message is routed to the agent corresponding to the to-be-debugged application sub-module, and the agent corresponding to each application sub-module is configured to convert the debugging message into a debugging message corresponding to a programming language of the application sub-module.

31. A computing device, wherein the computing device comprises a processor, a memory, and a display, wherein
the processor is configured to execute instructions stored in the memory, so that the computing device is enabled to perform the method according to any one of claims 1 to 16.

32. A computer-readable storage medium, comprising computer program instructions, wherein when the computer program instructions are executed by a computing device, the computing device performs the method according to any one of claims 1 to 16.
